# EUROPEAN PATENT APPLICATION

(11) **EP 4 791 075 A1**
(43) Date of publication of application: **12.08.2026**
(21) Application number: 26151548.0
(22) Date of filing: 13.01.2026
(51) Int. Cl.: H04W 28/02, H04L 47/283, H04L 47/32, H04W 72/543

(54) **DELAY-CRITICAL GBR QOS FRAMEWORK IMPLEMENTATION IN A BASE STATION**

(30) Priority: 06.02.2025 FI 20255092
(71) Applicant: Nokia Solutions and Networks Oy, 02610 Espoo (FI)
(72) Inventor: SANCHEZ MOYA, Fernando, Wroclaw (PL); P, Sri Radha Krishna Kiran, Bangalore (IN); KRISHNAMURTHY, Raghuram Reddy, Bangalore (IN)
(74) Representative: Nokia EPO representatives

(57) **Abstract**

A method performed by a base station to implement Delay Critical-Guaranteed Bit Rate Quality of Service (DC-GBR QoS) support is provided. Then method includes (i) receiving, at layer 2 (L2) protocol level, QoS flows from upper layer protocol, (ii) mapping the QoS flows to Data Radio Bearers (DRB) from one or more DRB profiles, (iii) processing the QoS flows according to the DRB at the L2 protocol level to establish a priority path to transfer prioritized data packets of the QoS flows and (iv) transporting the QoS flows to a Layer 1 (L1) protocol level. The prioritized data packets include Maximum Data Burst Volume (MDBV) compliant data packets and Guaranteed Flow Bit Rate (GFBR) compliant data packets.

## Description

### FIELD OF THE INVENTION:

The present invention generally relates to implementation of delay-critical GBR (DC-GBR) QoS framework as defined in 3GPP in a base station.

### BACKGROUND OF THE INVENTION:

TS 23.501 System architecture for the 5G system (5GS) describes the standardized 3rd Generation Partnership Project (3GPP) Quality of Service (QoS) framework in clause 5.7 QoS model. It states that "The 5G QoS model is based on QoS Flows. The 5G QoS model supports both QoS Flows that require guaranteed flow bit rate (GBR QoS Flows) and QoS Flows that do not require guaranteed flow bit rate (non-GBR QoS Flows)". Clause 5.7.3 5G QoS characteristics specify the 5G QoS characteristics associated with a 5QI (5G QoS identifier), with Resource type differentiating between non-GBR, GBR and delay-critical GBR. More specifically, clause 5.7.3.2 Resource type states: "A GBR QoS Flow uses either the GBR resource type or the Delay-critical GBR resource type. The definition of PDB and PER are different for GBR and Delay-critical GBR resource types, and the MDBV parameter applies only to the Delay-critical GBR resource type". The following additional clauses provide details on the characteristics of delay-critical GBR QoS:
- Clause 5.7.3.4 on Packet delay budget (PDB): "For GBR QoS Flows using the Delay-critical resource type, a packet delayed more than PDB is counted as lost if the data burst is not exceeding the MDBV within the period of PDB and the QoS Flow is not exceeding the GFBR."
- Clause 5.7.3.5 on Packet error rate (PER): "For GBR QoS Flows with Delay-critical GBR resource type, a packet which is delayed more than PDB is counted as lost, and included in the PER unless the data burst is exceeding the MDBV within the period of PDB or the QoS Flow is exceeding the GFBR."
- Clause 5.7.3.7 on Maximum Data Burst Volume (MDBV):
   - "Each GBR QoS Flow with Delay-critical resource type shall be associated with a Maximum Data Burst Volume (MDBV)."
   - "MDBV denotes the largest amount of data that the 5G-AN is required to serve within a period of 5G-AN PDB."
   - "Every standardized delay-critical GBR 5QI is associated with a default value for the MDBV "

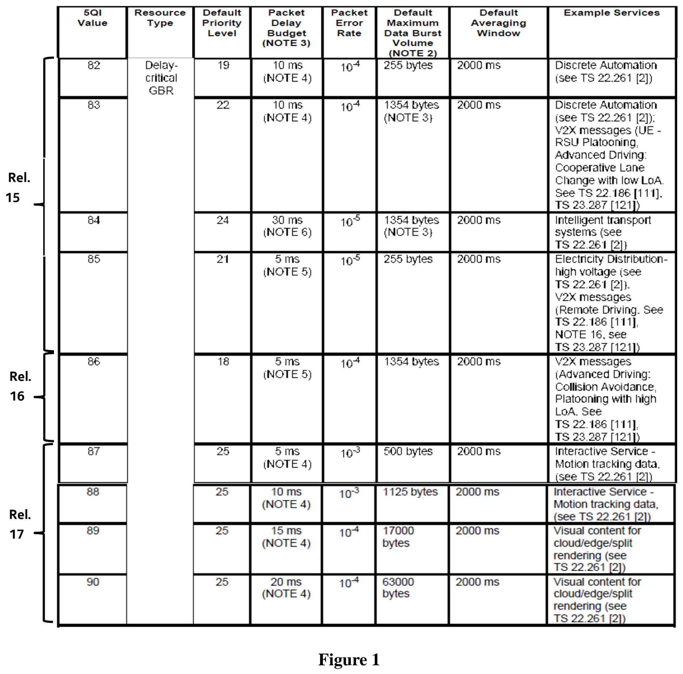

In comparison with non-GBR and GBR QoS, it can be observed that delay-critical GBR imposes more stringent PDB/PER constraints and introduces the notion of MDBV. Figure 1 shows the delay-critical GBR 5QIs that have been defined so far in 3GPP (extract from Table 5.7.4-1: Standardized 5QI to QoS characteristics mapping in TS 23.501). Referring to Figure 1, example services of delay-critical GBR (DC-GBR) type can range from inelastic traffic patterns with modest data rates and stringent latency/reliability requirements (e.g. discrete automation, industrial IoT) to rate-adaptive and bandwidth-hungry services with less stringent latency/reliability (e.g. interactive media such as cloud gaming and eXtended Reality (XR)). DC-GBR is the QoS resource type used to offer (UR)LLC services with varying degrees of latency/reliability requirements. It shares with regular GBR the need for a guaranteed flow bit rate (GFBR), but it additionally demands the fulfilment of more ambitious latency (PDB) and reliability (PER) requirements.

QoS-aware scheduling is well-known in the prior art, but there is no solution available in the prior art that implements the delay-critical GBR QoS framework defined in 3GPP, which spans well beyond scheduling. Thus, there is a need for a solution to implement 3GPP delay-critical GBR QoS support in a base station.

### SUMMARY OF THE INVENTION:

An object of the present invention is to bridge a gap between the standard requirements defined for delay-critical GBR QoS and the technical solution for a feasible implementation in the base station (i.e. gNB). It focuses on the main Layer 2 (L2) and packet scheduler enhancements to be introduced in the gNB for DC-GBR QoS support. The proposed technical solution establishes a "priority lane" or "priority path" across L2 for DC-GBR traffic compliant with the MDBV and GFBR configuration and makes use of a "best-effort lane" for non-compliant DC-GBR traffic (i.e. excess traffic beyond MDBV or GFBR). The present embodiment provides a framework to offer novel (UR)LLC services with varying degrees of latency/reliability requirements based on the PDB and PER. This framework enables anchoring the other URLLC features in the gNB to meet those requirements. It can be also used to additionally support on top Time Sensitive Networking (TSN) in a RAN.

According to one aspect of the present embodiment, a method performed by a base station to implement Delay Critical-Guaranteed Bit Rate Quality of Service (DC-GBR QoS) support is provided. The method includes (i) receiving, at layer 2 (L2) protocol level, QoS flows from upper layer protocol, (ii) mapping the QoS flows to Data Radio Bearers (DRB) from one or more DRB profiles, (iii) processing the QoS flows according to the DRB at the L2 protocol level to establish a priority path to transfer prioritized data packets of the QoS flows and the prioritized data packets includes MDBV compliant data packets and GFBR compliant data packets, and (iv) transporting the QoS flows to a Layer 1 (L1) protocol level. The L2 protocol level includes L2-Non-Real-Time functionality (L2-NRT) and L2-Real-Time functionality (L2-RT). The L2-NRT includes (i) a Service Data Adaptation Protocol (SDAP) layer, (ii) a Packet Data Convergence Protocol (PDCP) layer, and (iii) a Radio Link Control (RLC) layer. The L2-RT includes (i) a Media Access Control (MAC) layer, when there is no split in the RLC layer and the L2-RT includes a RLC low-layer and MAC layer, when there is a split in the RLC layer. The method further includes determining whether data packets in the L2-RT are the GFBR compliant data packets based on the total data volume scheduled within an averaging window for a first predefined time interval and transporting the GFBR compliant data packets in the priority path to the Layer 1 (L1) protocol level. The method further includes (i) configuring a discard timer with a predefined time interval for each data packet received at the PDCP buffer according to the Packet Delay Budget (PDB), (ii) sending an indication to the PDCP buffer and the RLC buffer to delete the data packets when the predefined time interval is expired for the data packets, and (iii) deleting the data packets in the PDCP buffer and the RLC buffer according to the indication

According to another aspect of the present embodiment (L2 solution 0), the method includes receiving and buffering data packets of the QoS flows at a PDCP buffer in the PDCP layer, configuring a discard timer with a predefined time interval for each data packet according to a Packet Delay Budget (PDB), queuing the data packets in a queue at a RLC buffer of the RLC layer, transporting the data packets from the RLC buffer to a RLC low-layer buffer of the RLC low-layer or a MAC buffer in the MAC layer, and discarding the data packets at the PDCP buffer and the RLC buffer, when the predefined time interval is expired for the data packets.

According to yet another aspect of the present embodiment (L2 solution 1), the method includes receiving and buffering data packets of the QoS flows at a PDCP buffer in the PDCP layer, determining whether the data packets are the Maximum Data Burst Volume (MDBV) compliant packets based on the total data volume received within a sliding window for a second predefined time interval and the second predefined time interval is a Packet Delay Budget (PDB), transferring the MDBV compliant data packets to the RLC layer and discarding MDBV non-compliant data packets from the PDCP buffer, queuing the MDBV compliant data packets in a queue at a RLC buffer of the RLC layer, and transporting the MDBV compliant data packets from the RLC layer to a RLC low-layer buffer of the RLC low-layer or a MAC buffer in the MAC layer.

According to further aspect of the present embodiment (L2 solution 2), the method includes receiving and buffering data packets of the QoS flows at a PDCP buffer in the PDCP layer, determining whether the data packets are MDBV compliant packets based on the total volume received within a sliding window for a second predefined time interval and the second predefined time interval is a Packet Delay Budget (PDB), queuing the MDBV compliant data packets, in a first queue at a RLC buffer of the RLC layer, marking MDBV non-compliant data packets as de-prioritized packets and storing the deprioritized packets in the PDCP buffer and transporting the MDBV compliant data packets from the first queue to a RLC low-layer buffer of the RLC low-layer or a MAC buffer in the MAC layer.

The method further includes when PDCP out-of-order delivery is configured and the MDBV compliant packets are not available in the PDCP buffer, (i) queuing the de-prioritized packets stored in the PDCP buffer in a second queue of the RLC buffer and (ii) transporting the de-prioritized data packets from the second queue to the RLC low-layer buffer or the MAC buffer, only when there are no MDBV compliant packets in the RLC low-layer buffer or the MAC buffer. The method further includes when PDCP out-of-order delivery is configured and the MDBV compliant packets are available in the PDCP buffer (i) deleting the de-prioritized data packets in a second queue of the RLC buffer, when the MDBV compliant data packets are received from the PDCP buffer or an indication received from said PDCP buffer and (ii) deleting the de-prioritized data packets in the RLC low-layer buffer or the MAC buffer, when said MDBV compliant data packets are received from said first queue.

The method further includes when PDCP in-order delivery is configured and the MDBV compliant packets are not available in the PDCP buffer: (i) queuing the de-prioritized packets, in the first queue at the RLC buffer and (ii) transporting the de-prioritized packets from the first queue to the RLC low-layer buffer or the MAC buffer. The method further includes when PDCP in-order delivery is configured and the MDBV compliant packets are available in the PDCP buffer: retaining the de-prioritized data packets in the first queue at the RLC buffer, when the MDBV compliant data packets are received from the PDCP buffer and retaining the de-prioritized data packets in the RLC low-layer buffer or the MAC buffer, when the MDBV compliant data packets are received from the first queue..

In another aspect of the present embodiment a base station or gNB to implement Delay Critical-Guaranteed Bit Rate Quality of Service (DC-GBR QoS) support is provided. The base station includes a transceiver, and a controller coupled with the transceiver and configured to: (i) receive, at layer 2 (L2) protocol level, QoS flows from upper layer protocol, (ii) map the QoS flows to Data Radio Bearers (DRBs) from one or more DRB profiles, (iii) process the QoS flows according to the DRB at the L2 protocol level to establish a priority path to transfer prioritized data packets of the QoS flows and the prioritized data packets includes MDBV compliant data packets and GFBR compliant data packets, and (iv) transport the QoS flows to a Layer 1 (L1) protocol level.

### BRIEF DESCRIPTION OF DRAWINGS:

The advantages and features of the invention will become more clearly apparent from the following description which refers to the accompanying drawings given as non-restrictive examples only and in which:
Figure 1 illustrates the Standardized delay-critical GBR 5QIs and 3GPP release in which they were defined;
Figure 2 illustrates short-term and long-term rate requirements for DC-GBR (i.e. up to MDBV bits during RAN PDB milliseconds and GFBR measured over Averaging Window);
Figure 3 illustrates how Delay-critical GBR QoS defines a clear short-term or burst peak rate requirement (MDBV/RAN PDB) and a long-term average rate requirement (GFBR measured over Averaging Window);
Figure 4 illustrates a protocol stack of a base station to implement delay-critical GBR QoS support in accordance with one embodiment herein;
Figure 5 illustrates a L2 solution 0 for DC-GBR QoS: MDBV control disabled in accordance with one embodiment herein;
Figure 6 illustrates a sliding window of RAN PDB duration for MDBV control at L2-HI-CU (PDCP). Option (1) discards excess data volume above MDBV, whereas option (2) marks this excess for deprioritized treatment in lower layers;
Figure 7 illustrates L2 solution 1: discard non-MDBV-compliant traffic in accordance with one embodiment herein;
Figure 8a & 8b illustrates L2 solution 2 for DC-GBR QoS: de-prioritize non-MDBV-compliant traffic and case with PDCP out-of-order delivery configured in accordance with one embodiment herein;
Figure 9a & 9b illustrates L2 solution 2 for DC-GBR QoS: de-prioritize non-MDBV-compliant traffic and case with PDCP in-order delivery configured in accordance with one embodiment herein;
Figure 10 illustrates a flow diagram of L2 solution 2 for DC-GBR QoS in accordance with one embodiment herein;
Figure 11 describes the average rate control implemented by the L2-PS for GFBR assurance in accordance with one embodiment herein; and
FIG. 12 is a block diagram illustrating components of the base station according to some example embodiments, able to read instructions from a machine-readable or computer-readable medium (e.g., a non-transitory machine-readable storage medium) and perform any one or more of the methodologies discussed herein.

### DETAILED DESCRIPTION OP PREFERRED EMBODIMENTS

Some embodiments of this invention, illustrating all its features, will now be discussed in detail.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Terms used in the present disclosure are used only to describe specific embodiments and may not be intended to limit the scope of other embodiments. The singular expression may include the plural expression unless the context clearly dictates otherwise. Terms used herein, including technical or scientific terms, may have the same meanings as commonly understood by one of ordinary skill in the art described in the present disclosure. Among the terms used in the present disclosure, terms defined in a general dictionary may be interpreted with the same or similar meaning as the meaning in the context of the related art, and unless explicitly defined in the present disclosure, ideal or excessively formal meanings is not interpreted as In some cases, even terms defined in the present disclosure cannot be construed to exclude embodiments of the present disclosure.

DC-GBR is the QoS resource type used to offer (UR)LLC services with varying degrees of latency/reliability requirements. It shares with regular GBR the need for a guaranteed flow bit rate (GFBR), but it additionally demands the fulfilment of more ambitious latency (PDB) and reliability (PER) requirements. In order to achieve this, the notion of MDBV is essential, and in the following we provide an explanation about its role in the provisioning of DC-GBR QoS.

TS 23.501 clause 5.7.2.5 Flow Bit Rates states the following for GBR QoS flows: "The Guaranteed Flow Bit Rate (GFBR) denotes the bit rate that is guaranteed to be provided by the network to the QoS Flow over the Averaging Time Window. The Maximum Flow Bit Rate (MFBR) limits the bit rate to the highest bit rate that is expected by the QoS Flow (e.g. excess traffic may get discarded or delayed by a rate shaping or policing function at the UE, RAN, UPF). Bit rates above the GFBR value and up to the MFBR value, may be provided with relative priority determined by the Priority Level of the QoS Flows".

Clause 5.7.3.6 Averaging Window mentions: "The Averaging Window represents the duration over which the GFBR and MFBR shall be calculated (e.g. in the (R)AN, UPF, UE)". The default Averaging Window (AW) for the standardized GBR and delay-critical GBR 5QIs is 2 seconds. This allows to define an objective and relatively long time-window to average the achieved bit rate for the flow, comparing it against the GFBR/MFBR configuration for QoS enforcement purposes. The PDB of interactive and low latency services is, however, much shorter than typical AW durations. In these cases, it is not enough to fulfill an average bit rate, but to make sure that 'compliant bursts' meet their PDB in a shorter timescale. It is here where the role of MDBV becomes prominent, as it defines the maximum data burst volume within a time window of 5G-AN (5G Access Network) PDB duration for which the 5G-AN (Radio Access Network or RAN in the present embodiment) should provide delay-critical QoS guarantees.

It should be noted that in case of regular GBR (i.e. non-delay-critical GBR), there is no associated MDBV, creating some ambiguity on the extent of burst sizes or instantaneous bit rates that should meet the PDB (assuming long-term compliance with the GFBR). For instance, considering the case of 5QI 3 with PDB=50ms and AW=2s:
- Largest data burst volume compliant with the GFBR: GFBR [bits/s] * AW [s] = 2 * GFBR [bits]
- Required burst peak rate (short-term average over PDB duration) to serve largest compliant burst = 2 * GFBR / PDB = 40 * GFBR [bits/s]

This means that a short-term bit rate of 40 times the average rate requirement could be still compliant with the configured GFBR and, therefore, it should be in principle served by the RAN with PDB guarantees. Obviously, the demands on the RAN will be vastly different depending on the burstiness of the traffic and affect functionalities such as the radio admission control and packet scheduling. For instance, it is significantly easier to deal with moderate size bursts that regularly spread their arrivals over the AW duration, than dealing with sparse but huge bursts that must get transmitted within a stringent PDB.

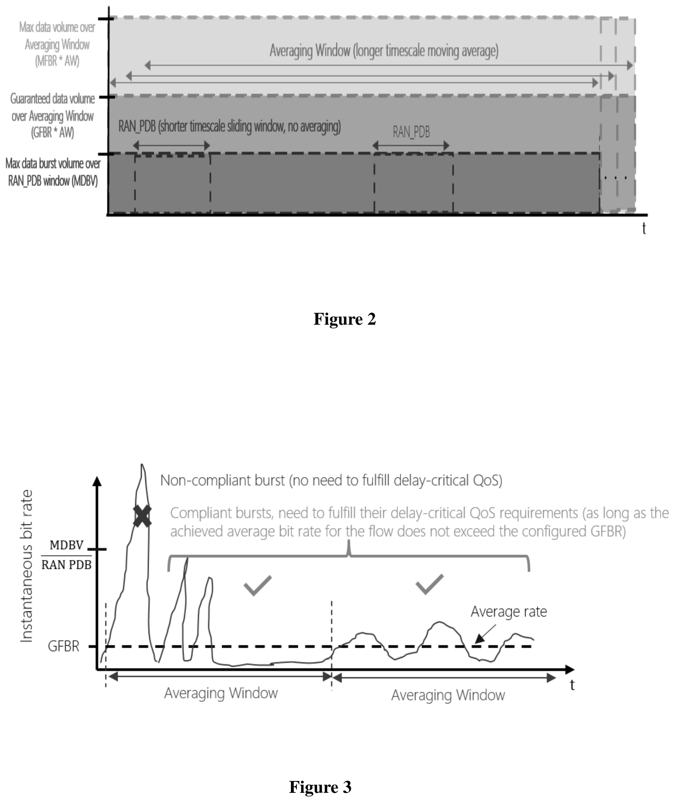

Delay-critical GBR targets services with a high degree of performance determinism and guarantees strict PDB/PER requirements. In order to remove any ambiguity on service compliance and to facilitate the definition of fully objective service level agreements (SLAs), MDBV (over RAN PDB) in addition to GFBR (over AW) allows to configure precise and unambiguous rate control for these services. Figures 2 and 3 illustrate how these parameters define two timescales of rate control (short-term/long-term) and facilitate an efficient RAN treatment to meet DC-GBR QoS: whether a low latency requirement can be achieved with a certain reliability depends on packet size and inter-arrival rate of the packets, which can be controlled with the MDBV and GFBR configuration.

The 5G QoS characteristics and parameters MDBV, PDB, GFBR and Averaging Window (AW) define rate control mechanisms operating at different timescales. MDBV shall be interpreted as the maximum data burst volume within a time window equal to the RAN portion of the PDB (in the most general case, 5G-AN PDB) that should be served with delay-critical QoS requirements (i.e. meet the PDB of the 5QI with 1-PER probability of success).

The present embodiment bridges a gap between the standard requirements defined for delay-critical GBR QoS and the technical solution for a feasible implementation in the gNB. The present embodiment focuses on the main L2 and packet scheduler enhancements to be implemented for DC-GBR QoS support. The present embodiment provides a framework to offer novel (UR)LLC services with varying degrees of latency/reliability requirements, e.g. PDB = [5, 30]ms and PER = [10⁻²,10⁻⁵]. This framework of the present embodiment enables anchoring other URLLC features. It can be also used to support on top Time Sensitive Networking (TSN) in the RAN of the present embodiment. For instance, a discrete automation service in a factory configured over 5QI 82 will require the activation of this DC-GBR QoS feature in the gNB, together with the activation of other URLLC features such as reliable link adaptation, UL configured grants, reduced periodicity scheduling request, etc. The present embodiment can be done in the gNB via so called "DRB profiles", which configure a certain set of features and parameterization (e.g. PDCP/RLC/MAC profiles) depending on the tuple PLMN ID/slice ID/5QI. The standard leaves quite some details open for implementation, such as e.g. how to enforce MDBV, what to do with the excess data volume above MDBV, how to schedule DC-GBR traffic and the relation with other types of traffic (i.e. how to meet the stringent PDB/PER in an efficient manner and while being fair to other services), etc. The present embodiment details several standard-compliant implementation options focused on the downlink (DL) direction. More specifically, the present embodiment addresses the following technical problems:
- Rate control at two timescales based on MDBV/5G-AN PDB (short-term or burst peak rate requirement) and GFBR measured over Averaging Window (longer-term average rate requirement). This is required for DC-GBR as the strict PDB/PER requirements only apply to MDBV-compliant and GFBR-compliant traffic (i.e. non-compliant or excess traffic does not necessarily have to meet the PDB and it does not contribute to the PER statistic).
   ∘ Current GBR solutions based on a token bucket for the rate control are not enough to enforce both rate requirements. A token bucket can control an average rate and a max burst size, but it cannot ensure both rate requirements in general. Note that just allowing a max burst size = MDBV is not enough, as this should be associated to a latency constraint equal to 5G-AN PDB (hence defining a short-term rate requirement equal to MDBV/5G-AN PDB, in addition to the average rate based on GFBR).
   ∘ State-of-the-Art (SOTA) solutions focus on doing MDBV control at MAC/scheduler level. Linking such a strict and short-timescale control to the scheduled bits over the air interface leads to complexities and transmission inefficiencies that depend on channel conditions, traffic arrival pattern and competing load. In the present embodiment, MDBV control is performed at RAN ingress in DL (i.e. PDCP layer).
- QoS-aware L2 treatment of DC-GBR traffic. This includes considerations across L2 (packet marking, queues management, flow control, packet scheduling) to meet demanding PDB/PER for these services while being fair towards other services. The present embodiment puts the focus on a holistic L2 product solution that addresses, among others, the following aspects left by the standard up to implementation:
   ∘ What to do with non-MDBV-compliant traffic? Non-MDBV-compliant traffic can, in principle, be either discarded or still delivered but in a deprioritized manner. As strict discards can be too aggressive and affect the QoE for rate-adaptive services (e.g. XR or cloud gaming that might not exactly match the configured MDBV), the present embodiment proposes an alternative that only deprioritizes this traffic and treats it best-effort, with the associated packet marking, queues, flow control and scheduling across L2 protocols and entities.
   ∘ QoS-aware packet scheduling of DC-GBR traffic: this is an area with extensive prior art and the present embodiment reuses the main principles i.e. packet scheduling performed based on weighted scheduling metrics with priority, deadline and channel-dependent factors.

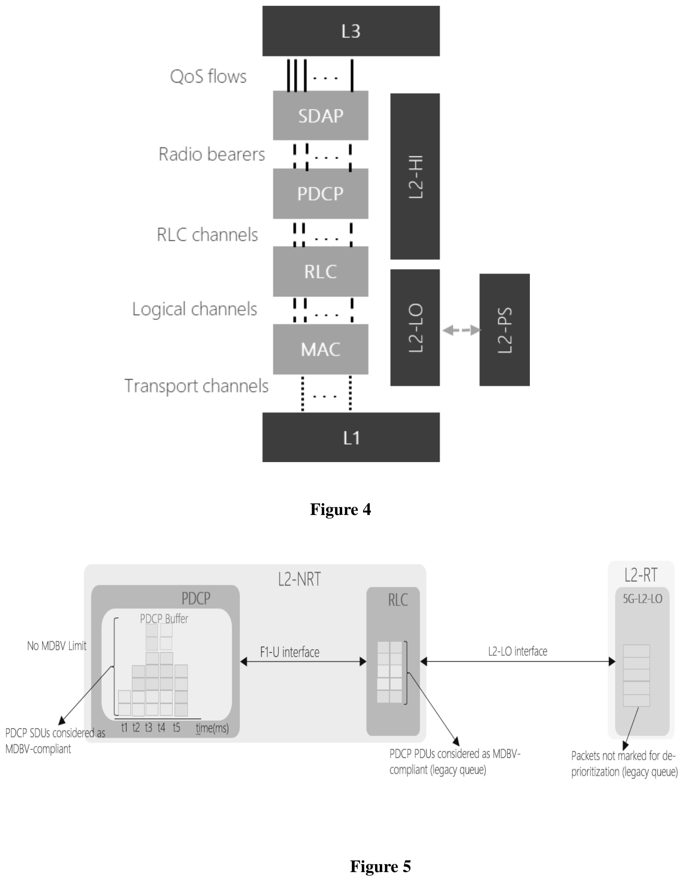

Figure 4 illustrates a protocol stack of a Base station (gNB) to implement a delay-critical GBR QoS support in accordance with one embodiment herein. A plurality of data flows with different QoS requirements may be transmitted in each Protocol Data Unit (PDU) session and are referred to as QoS flows. Each QoS flow packet is classified and marked using 5QI (5G QoS identifier) with Resource type differentiating between non-GBR, GBR and delay-critical GBR. In 5G networks, QoS Flows are crucial for ensuring the quality of data transmission.

The protocol stack implemented in the base station includes a layer 1 (L1) or physical (PHY) layer and a layer 2 (L2) or data link layer and layer 3 (L3) or upper-level layer or network layer. The L1 is mainly used to provide a physical radio channel for transmitting higher-layer service(s). The L2 includes a L2 real time (RT) layer and a L2 non-real time layer (L2-NRT). L2-NRT also called as L2-NRT comprises (i) a Service Data Adaptation Protocol (SDAP) layer, (ii) a Packet Data Convergence Protocol (PDCP) layer, and (iii) a Radio Link Control (RLC) layer. The L2-RT comprises a Media Access Control (MAC) layer, when there is no split in the RLC layer. The L2-RT comprises a RLC low-layer and MAC layer, when there is a split in the RLC layer.

In the present embodiment QoS flows from upper layer protocol are received at the layer 2 (L2) protocol level, i.e. L2 layer. In gNB, DRB profiles are defined per 5QI and 5QIs are assigned to QFI by the 5GC. The received QoS flows are mapped to Data Radio Bearers (DRB) from the one or more DRB profiles. Further, the QoS flows are processed according to the DRB at the L2 protocol level to establish a priority path to transfer prioritized data packets of the QoS flows and the prioritized data packets include MDBV compliant data packets and GFBR compliant data packets. The QoS flows received in the L2 layer are transported to the Layer 1 (L1) protocol level.

Hereafter, we describe in detail the different alternatives to support the proposed DC-GBR QoS framework in a RAN. We start by introducing the general principles of the solution and L2 product architecture with the simplest option that disables MDBV control (solution 0). Afterwards, we present the solutions that control MDBV in order of increasing degree of sophistication: solution 1 discards the excess data above MDBV, whereas solution 2 de-prioritizes the treatment of this excess data across L2 (with different considerations for PDCP in-order and out-of-order delivery modes). Finally, we conclude by describing the details of the associated packet scheduler (L2-PS) implementation. In addition, when there is a split in the RLC layer, the combination of SDAP layer, PDCP layer, RLC high layer are called Layer 2 High (L2-HI) and the combination of the RLC low-layer and MAC layer are called Layer 2 Low (L2-LO). The present embodiment described hereafter considers that there is a split in the RLC layer.

### L2 solution 0 for DC-GBR QoS: MDBV control disabled

This solution is illustrated in Figure 5, and it serves to establish the context for what comes afterwards with the other more advanced solutions. Disabling the MDBV control is generally not recommended, as it risks compromising the DC-GBR QoS requirements of the traffic that is MDBV-compliant, both at intra-UE and inter-UE levels (e.g. spending delay-critical resources in serving excess traffic of a certain DC-GBR DRB may compromise the QoS of another DC-GBR DRB). The performance guarantees provided to DC-GBR flows are based on MDBV, GFBR, PDB and PER requirements, so any deviation from the committed MDBV can compromise the sensitive performance of these services (functionalities such as the scheduling, radio admission control, resource pooling reservations and configured grants depends on the value of MDBV).

The data received at RAN ingress (SDAP protocol layer) in delay-critical GBR QoS flows is mapped to corresponding delay-critical GBR data radio bearers (DRBs), with associated buffers in the gNB at the PDCP protocol layer (implemented as part of the L2-NRT or non-real-time functionality). In this case without MDBV control, there is no special tracking of the received data volume over a time window of RAN PDB duration, and the received packets or PDCP service data units (SDUs) are buffered in a single queue per DRB and considered as if they were all MDBV-compliant. One of the most relevant buffer management techniques at PDCP for DC-GBR is the configuration of a discard timer according to the PDB: this ensures that PDCP SDUs are discarded when they become obsolete for the intended service, avoiding their unnecessary transmission and corresponding waste of radio resources. In terms of delivery modes, both PDCP in-order and out-of-order delivery are supported by the present embodiment.

MFBR enforcement at PDCP could be considered optional in a RAN implementation for DC-GBR. For instance, the core network may already do rate-capping for the flow based on MFBR, with the RAN simply providing best-effort treatment for any data rate above the GFBR. In any case, MFBR could be also enforced at PDCP hosted at gNB-CU (centralized unit) based on the same Averaging Window configured for GFBR assurance at L2-PS. Note that this is a moving average window different from the strict sliding window for MDBV enforcement , as it averages or filters the arriving flow bit rate over a longer time window (e.g. 2 seconds duration, which is the default AW suggested in 3GPP for GBR 5QIs, as it was shown in Figure 1).

The standardized F1-U interface connects the user plane between the gNB-CU and the distributed unit (gNB-DU), where the RLC and lower layers protocols reside. The gNB-DU functionality can be split in the L2-HI-DU (which includes the NRT part of RLC) and the L2-LO functionality (which includes the RT part of RLC, i.e. DL segmentation, and the MAC layer), interconnected via a proprietary L2-LO interface. RLC Unacknowledged Mode (UM) is favored for DC-GBR, as RLC Acknowledged Mode (AM) retransmissions will be typically too slow and out of the latency budget dictated by the PDB (the reliability required to meet the PER of these services must be achieved mainly via link adaptation and faster HARQ retransmissions).

The flow control over these interfaces aims at ensuring proper buffer occupancy at the corresponding entities, avoiding either situations of underutilization (i.e. the radio capacity would allow significantly higher throughput for the flow than what the available buffered data allows) or overflow/excessive queueing delay. For DC-GBR, it is proposed to follow the flow control design as per the GBR applied in the existing art, based on the following:
- Initialize it to send data at the DL MFBR configured for the DRB during bearer setup or after inactivity to ensure a good rate of DL data flow.
- At gNB-CU PDCP, the estimated throughput (estTput) over F1-U for the DC-GBR DRB is capped to a maximum of DL MFBR and minimum of DL GFBR to optimize the buffering at gNB-DU RLC and allow PDCP to discard the PDCP SDUs exceeding the configured discard timer.
- DC-GBR specific thresholds like max transfer delay for F1-U flow control and queuing delay for internal flow control over L2-LO interface should be defined.
- At L2-PS, the estimated throughput (estTput) is set as DL GFBR, and the maximum throughput (maxTput) is assigned considering the sum of all the DC-GBR DRB(s) DL MFBR(s) of the UE.

### MDBV Control

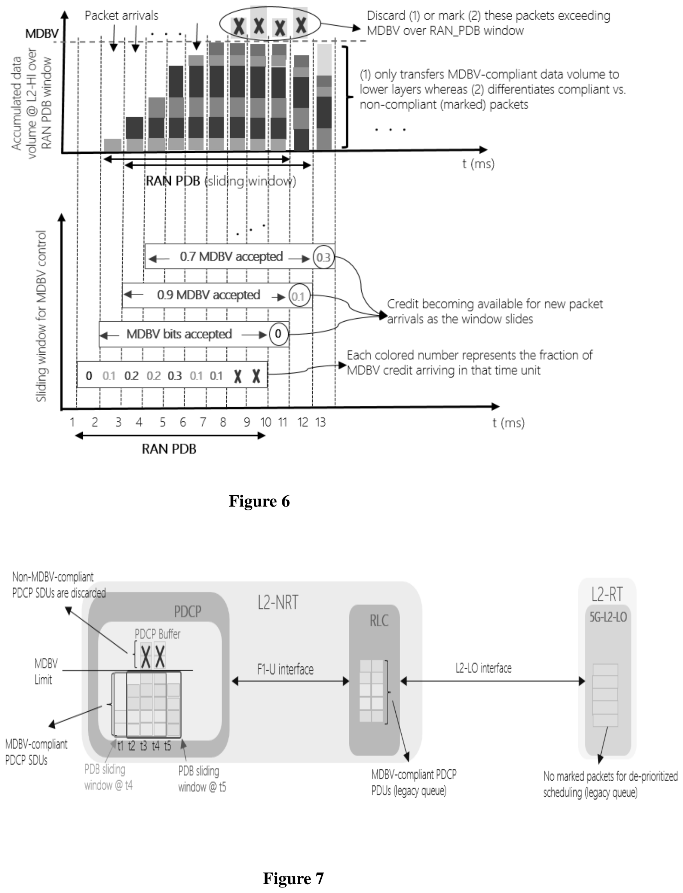

The MDBV control of the solution consists of a mechanism based on sliding window at PDCP plus corresponding queues, flow control and prioritization at lower layers. Figure 6 illustrates the mechanism to do MDBV enforcement or control at L2-HI-CU (PDCP). It consists of a sliding window of RAN PDB milliseconds duration that tracks the accumulated data volume received at RAN ingress during this time window. The example depicts the most general case in which the MDBV may arrive spread over several packets, as it could be e.g. the case with 5QI 89/90 for XR services with large MDBV corresponding to video frames. The scheme can be configured to either discard the excess data volume above MDBV or mark it for de-prioritized treatment in lower layers, ensuring that only the committed burst peak rate (MDBV/RAN PDB) gets delay-critical priority. The standard leaves this up to implementation, only stating that the excess traffic does not count towards the PER statistic in case the PDB gets exceeded. The discard or de-prioritization of this non-MDBV-compliant traffic is important to ensure that it does not interfere with the guarantees that should be provided to the MDBV-compliant traffic, both at intra-UE and inter-UE levels ( spending delay-critical resources in serving excess traffic of a certain DC-GBR DRB may compromise the QoS of another DC-GBR DRB).

### L2 solution 1 for DC-GBR QoS: discard non-MDBV-compliant traffic

This solution is illustrated in Figure 7, and it makes use of the sliding window for MDBV control described in the previous subsection, in order to track the accumulated data volume received at L2-HI-CU (PDCP) over a time window of RAN PDB duration and discard the excess above MDBV. It is preferred to discard non-MDBV-compliant SDUs at PDCP level, before they become PDCP protocol data units (PDUs) with sequence number (SN) assigned. This avoids unnecessary delays at the UE's PDCP receiving entity in case of in-order delivery, as it will not be needed to wait for those discarded SDUs (that will never arrive and will require expiration of the PDCP re-ordering window timer) before delivering in-order the received packets to the upper layers.

This solution is relatively simple but can cause suboptimal (or, in some cases, unacceptable) user experience due to the strict discarding of the non-MDBV-compliant data. For instance, in case of rate-adaptive services, non-fully-characterized traffic sources or traffic sources with a mix of NRT and RT data in the same flow, discarding the excess data above the delay-critical MDBV (instead of striving to still serve it but in a de-prioritized, non-delay-critical manner) might be too aggressive and lead to degraded QoE.

### L2 solution 2 for DC-GBR QoS: deprioritize non-MDBV-compliant traffic

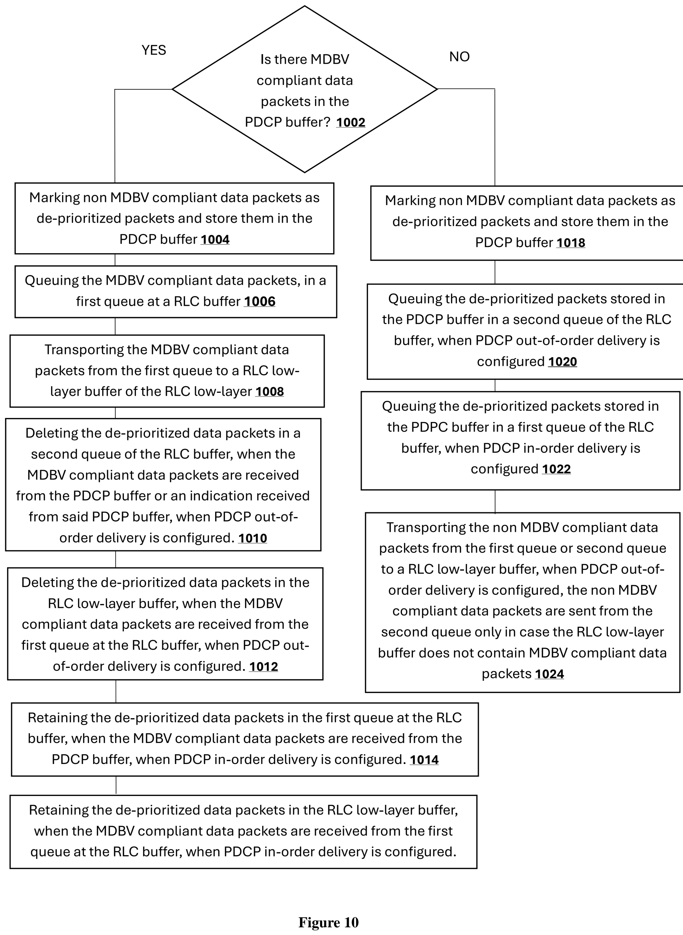

This solution also makes use of the MDBV control via sliding window described above, but instead of discarding the excess data volume above MDBV as in case of solution 1, it marks it for de-prioritized treatment across L2. The general principles of this solution are:
- At gNB L2-HI-CU (PDCP), the non-MDBV-compliant packets are buffered in a separate queue for the DRB and are sent out towards RLC (becoming PDCP PDUs with SN assigned) only when there is no MDBV-compliant data to be sent for the DRB (Refer Step 1020 & 1022 in Figure 10). In the alternative embodiment, at the PDCP buffer, the non-MDBV-compliant packets & the MDBV-compliant packets can be buffered in a single queue for the DRB.
- Both PDCP in-order and out-of-order packet delivery are supported
   - PDCP in-order delivery comes with associated delays when waiting for missing PDUs. We try to minimize the chances of discarding PDUs with SN by delaying the PDCP SN assignment.
   - PDCP out-of-order allows faster packet delivery to upper layers, although it requires applications that tolerate it and corresponding UE capability in DL.
- Support a proprietary mechanism on the F1-U interface, in order to define a proprietary information element (IE) for indicating the marked or non-MDBV-compliant data packets as lower priority packets
   - Option 1: Use native GTP-U extension to signal the prioritization (preferred option)
   - Option 2: Enhance the DL User Data (DUD) to make use of a spare bit (frame format for the NR user plane protocol as defined in TS 38.425). Non-preferred option as it can create future compatibility issues.

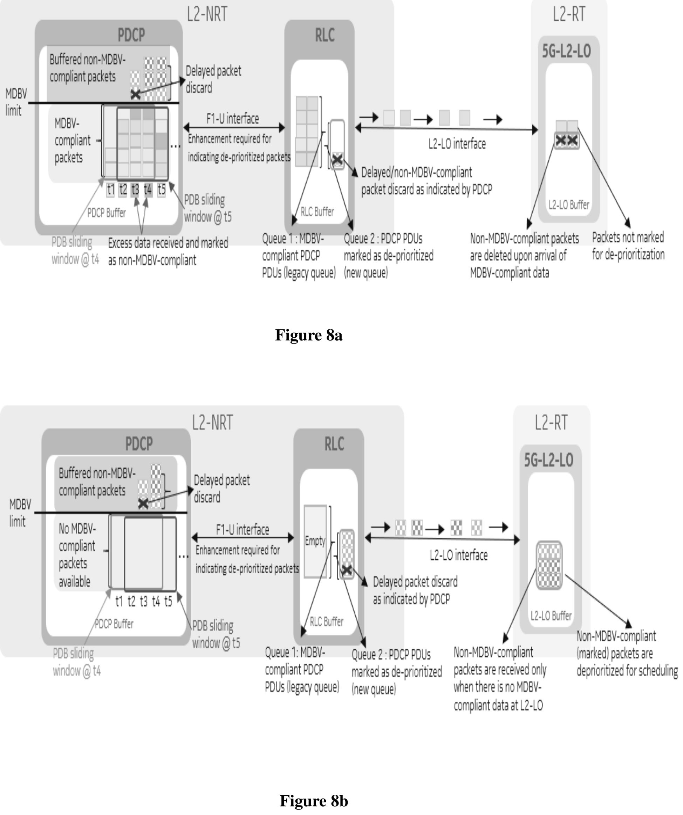

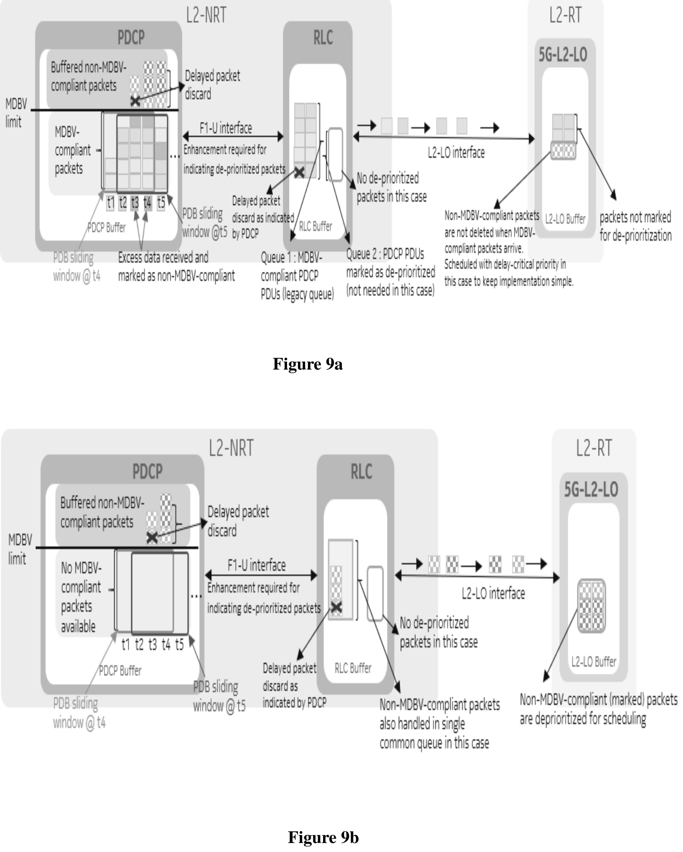

We differentiate the cases of out-of-order and in-order delivery, with and without MDBV-compliant data competing for transmission, as illustrated in Figures 8a, 8b, 9a and 9b. In the following, we describe those figures with the detailed handling carried out at each L2 entity. Figures 8a & 8b illustrate L2 solution 2 for DC-GBR QoS: de-prioritize non-MDBV-compliant traffic and case with PDCP out-of-order delivery configured in accordance with one embodiment herein. Figures 9a & 9b illustrate L2 solution 2 for DC-GBR QoS: de-prioritize non-MDBV-compliant traffic and the case with PDCP in-order delivery configured in accordance with one embodiment herein.

The gNB L2-HI-CU (PDCP) keeps two queues per DC-GBR DRB: MDBV-compliant SDUs and non-MDBV-compliant SDUs. In alternative embodiment, the gNB L2-HI-CU (PDCP) may keep a single queue to store both MDBV-compliant SDUs and non-MDBV-compliant SDUs. The non-MDBV-compliant packets are marked as de-prioritized packets (using proprietary F1-U IE) and sent to RLC only when there is no MDBV-compliant data available to be sent at PDCP (Figs. 8b and 9b also refer steps 1020 & 1022 of Fig. 10). PDCP can initiate the deletion of SDUs/PDUs when the associated discard timer expires. PDCP will indicate PDCP PDU discard to L2-HI-DU (RLC) for any excessively delayed packet waiting in the RLC buffer (i.e. those for which 'current time - PDCP arrival time > PDCP discard timer'). Based on this indication, RLC will discard the delayed RLC SDU corresponding to the PDCP SN, if RLC SN has not yet been assigned to the RLC SDU. Note that in case of RLC UM, RLC SN is only assigned in case of RLC SDU segmentation by lower layers.

It could be possible to define different PDCP discard timer durations for MDBV-compliant data (i.e. delay-critical) and non-MDBV-compliant data (e.g. NRT data in the same flow, as it could be the case with services such as cloud gaming that share the same flow for interactive and background scenes). Additionally, in case PDCP out-of-order delivery is configured, the deletion of non-MDBV-compliant packets can be triggered when MDBV-compliant data arrives for the DRB (refer step 1010 of Fig. 10). In this case, PDCP will initiate the discard of these packets and will indicate RLC to delete the non-MDBV-compliant packets from its buffer. The rationale for this is to prioritize the MDBV-compliant data for the GFBR consumption of the DRB (non-MDBV-compliant data contributes to the achieved throughput for the bearer and could therefore overshoot the GFBR, deprioritizing the subsequent MDBV-compliant data). This type of deletion is not done in case of in-order delivery configuration (refer step 1014 of Fig. 10), as any missing PDCP PDUs with SN already assigned would lead to delays at the PDCP receiver's reordering buffer, which could compromise the PDB.

PDCP discard mechanisms such as active queue management (AQM) and techniques for progressive dropping of packets as the buffer size increases are typically not recommended for DC-GBR services. These services target stringent performance guarantees and packet discards for the MDBV-compliant data should happen very rarely in practice (resource reservation by radio admission control functionality, together with the L2 prioritization described in this invention, should take care of it).

The DL data received at gNB L2-HI-DU (RLC) is handled in the following manner (i) The DL packets that are marked as de-prioritized are sent to L2-LO only when there is no MDBV-compliant data in the RLC buffer (Figs. 8b and 9b & step 1024 of Fig. 10), (ii) The buffered DL packets that are marked as de-prioritized can be discarded based on indication from PDCP (either due to PDCP discard timer expiration or arrival of MDBV-compliant packets in case of out-of-order delivery) and (iii) The internal flow control mechanism over L2-LO interface for both the MDBV-compliant and non-MDBV-compliant packets follows the regular GBR principles as known in the existing prior art.

Additionally, when PDCP out-of-order delivery is configured, discarding non-MDBV-compliant data at lower layers is less problematic (no need to wait for missing SNs before delivering PDUs to the receiver's upper layers) and the following applies:
- RLC segregates the de-prioritized packets in a separate queue and sends these marked packets only when there is no MDBV-compliant data waiting at L2-LO (Fig. 8b, refer step 1024 of Fig. 10), In an alternative embodiment, the RLC can combinedly store both de-prioritized packets and MDBV-compliant data packets in a single queue and sends the de-prioritized packets only when there is no MDBV-compliant data waiting at L2-LO.
- When RLC receives the request to delete non-MDBV-compliant RLC SDUs in its buffer, it can then initiate the flush indication to L2-LO to clear any existing non-MDBV-compliant packets (if any). Alternatively, L2-LO could flush the non-MDBV-compliant packets on its own upon reception of non-marked (MDBV-compliant) packets (Fig. 8a, refer steps 1010 & 1012 of Fig. 10).
- In this way, L2-LO buffer will contain either non-marked (MDBV-compliant) or marked (non-MDBV-compliant) packets but not a mix of both. This facilitates the scheduling by the L2-PS, which will apply delay-critical priority in the first case and de-prioritized/best-effort scheduling in the latter case,
- In case L2-LO contains non-marked (MDBV-compliant) packets instead, L2-PS applies delay-critical scheduling priority
- L2-LO can either keep the packets in a single/common queue or have a separate queue for marked packets, this is up to implementation (Figs. 8 and 9 assume a single L2-LO queue for a simpler implementation). As mentioned, the de-prioritized packets come to L2-LO from L2-HI-DU only when there are no MDBV-compliant packets in the L2-LO buffer (Fig. 8b)

On the other hand, in case PDCP in-order delivery is configured, the following applies:
- RLC does not need to keep the non-MDBV-compliant data in a separate queue (Fig. 9b, refer step 1022 of Fig. 10), as discards here will only happen in case of indication of discard timer expiration from PDCP (to minimize reordering delays from missing PDU SNs).
- New arrival of MDBV-compliant packets does not trigger deletion of non-MDBV-compliant packets, neither at RLC nor L2-LO (refer steps 1014 & 1016 of Fig. 10).
- RLC can still mark the non-MDBV-compliant data before sending it to L2-LO, so that L2-PS can prioritize the scheduling accordingly. In a simpler implementation with a single L2-LO queue, when this queue contains a mix of MDBV-compliant and non-MDBV-compliant data, delay-critical scheduling could be adopted (Fig. 9a); whereas if the queue contains only marked (non-MDBV-compliant) data, de-prioritized scheduling should take place (Fig. 9b).

### L2 packet scheduler for DC-GBR QoS

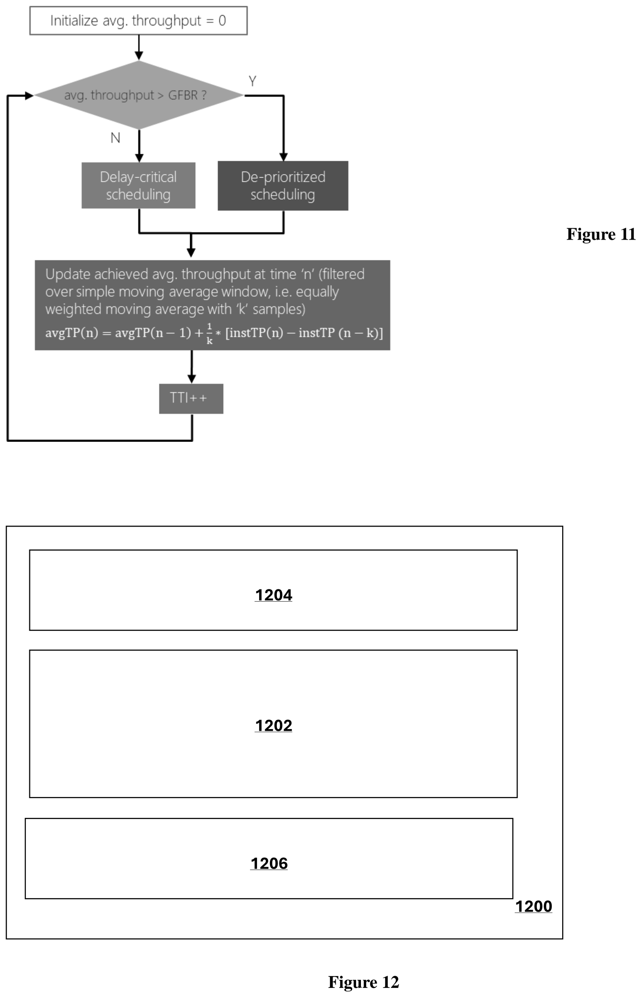

Figure 11 describes the average rate control implemented by the L2-PS for GFBR assurance. It is the responsibility of the L2-PS to ensure that the DC-GBR DRB is served and prioritized up to its configured GFBR over Averaging Window (AW). The achieved average data rate for each of these DRBs is monitored via a simple moving average (SMA) filter, also known as equally weighted moving average, with number of samples dictated by the configured AW duration. In the present embodiment, a SMA implementation is used over other types of filtering, such as e.g. exponential weighting moving average (EWMA), as it allows a fully standard-compliant implementation and objective observability on whether the rate requirements are being met or not for the DRB. EWMA is an Infinite Impulse Response (IIR) filter without bounded AW duration and with some parameters to tune that can interfere with a fully objective interpretation of measured data rate over a certain time window.

The formula shown in the figure 11 reflects the SMA getting updated by adding the new instantaneous throughput in the current slot or transmission time interval (TTI) 'n', while dropping the oldest throughput value from the averaging window (i.e. from 'k' slots before). All samples have the same weight, that is why each sample is divided by 'k', with 'k' being determined by the AW duration configured for the DRB.

In an alternative embodiment, GFBR control can be done at PDCP, similarly to the MDBV control being done at RAN ingress. This alternative would measure GFBR compliance over AW based on the incoming rate for the flow, marking packets when the GFBR gets exceeded. Therefore, this alternative would mark packets that are either non-GFBR-compliant or non-MDBV-compliant, for subsequent de-prioritized treatment across L2 as described above. As a reminder, 3GPP states that only the MDBV-compliant and GFBR-compliant packets of a DC-GBR QoS flow must meet their PDB with 1-PER reliability, whereas non-compliant packets do not necessarily have to meet these stringent requirements.

The advantage of this alternative is that it relies on a single point for rate-compliance checks (i.e. PDCP) which can simplify some aspects of the implementation (e.g. counters, dual-connectivity options). On the other hand, measuring the incoming rate for compliance check against the configured GFBR and correspondingly categorizing the traffic for treatment across L2 (either as delay-critical or de-prioritized), does not guarantee that the GFBR is actually getting scheduled for the flow. The alternative presented above with GFBR control at L2-PS measures the achieved average throughput for the flow and it can provide a more accurate view for performance monitoring and congestion handling actions such as notification control (i.e. notifying the core network and application when the RAN cannot meet the GFBR of a flow, which can be used to trigger application rate adaptation or switch to an alternative QoS profile - details in 5.7.2.4 in TS 23.501).

Other features such as baseband pooling also rely on L2-PS estimates of traffic demands in the next pooling period (e.g. 50ms) to reserve processing and radio resources (scheduled UEs/slot, PRBs) among cells according to traffic class priorities. In case of DC-GBR, the number of potential bursts compliant with MDBV and GFBR that may arrive in the upcoming pooling period play an essential role to inform those estimates, which requires the L2-PS tracking of the already achieved average throughput over a time window of (AW-pooling period) duration. Finally, it is also worth to emphasize that in UL we cannot do MDBV and GFBR control at UE's PDCP, having to rely on L2-PS mechanisms instead.

FIG. 12 is a block diagram illustrating components of gNB i.e. base station, according to some example embodiments, able to read instructions from a machine-readable or computer-readable medium (e.g., a non-transitory machine-readable storage medium) and perform any one or more of the methodologies discussed herein. The gNB 1200 includes a controller 1202, a memory 1204 and a transceiver 1206.

The controller 1202 controls the overall operation of the gNB 1200. For example, the controller 1202 may transmit and receive signals through the transceiver 1206. In addition, the controller 1202 may write data on the memory 1204 or read data from the memory 1204. According to various embodiments, the controller 1202 may control the device to perform operations according to various embodiments described in the present disclosure.

The memory 1204 may store data (such as basic programs for the operation of the gNB 1200), applications, configuration information, and the like. The memory 1204 may be configured by volatile memory, nonvolatile memory, or a combination of volatile and nonvolatile memory. In addition, the memory 1204 provides stored data according to a request of the controller 1202.

The transceiver 1206 provides an interface for performing communication with other devices in the network. For example, the transceiver 1206 converts a bit stream transmitted from the gNB (1200) to another device into a physical signal, and converts a physical signal received from the other device into a bit stream. That is, the transceiver 1206 may transmit and receive signals. Accordingly, the transceiver 1206 may be referred to as a modem, a transmitter, a receiver, or a transceiver. In this case, the transceiver 1206 enables the core network device to communicate with other devices or systems through a backhaul connection (e.g., a wired backhaul or a wireless backhaul) or a network.

Methods according to the embodiments described in the claims or specifications of the present disclosure may be implemented in the form of hardware, software, or a combination of hardware and software.

When implemented in software, a computer-readable storage medium storing one or more programs (software modules) may be provided. One or more programs stored in the computer-readable storage medium are configured to be executable by one or more processors in an electronic device (device). One or more programs include instructions for causing an electronic device to execute methods according to embodiments described in a claim or specification of the present disclosure.

Such programs (software modules, software) include random access memory, non-volatile memory including flash memory, read only memory (ROM), electrically erasable programmable ROM (electrically erasable programmable read only memory, EEPROM), magnetic disc storage device, compact disc-ROM (CD-ROM), digital versatile discs (DVDs), or other It may be stored in an optical storage device or a magnetic cassette. Alternatively, it may be stored in a memory composed of a combination of some or all thereof. In addition, each configuration memory may be included in plurality.

It is also noted that the operations and steps described with reference to the preceding figures illustrate only some of the possible scenarios that may be executed by one or more entities discussed herein. Some of these operations may be deleted or removed where appropriate, or these steps may be modified or changed considerably without departing from the scope of the presented concepts. In addition, the timing and sequence of these operations may be altered considerably and still achieve the results taught in this disclosure. The preceding operational flows have been offered for purposes of example and discussion. Substantial flexibility is provided by the embodiments in that any suitable arrangements, chronologies, configurations, and timing mechanisms may be provided without departing from the teachings of the discussed concepts.

As used herein, unless expressly stated to the contrary, use of the phrase 'at least one of', 'one or more of', 'and/or', variations thereof, or the like are open-ended expressions that are both conjunctive and disjunctive in operation for any and all possible combination of the associated listed items. Conditional language used herein, such as, among others, "can," "may," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without other input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

### LIST OF ABBREVIATIONS

5GS 5G System
5G-AN 5G Access Network (RAN or non-3GPP access)
5G-AN PDB 5G Access Network Packet Delay Budget
5QI 5G QoS Identifier
AM Acknowledged Mode
AW Averaging Window
CU Centralized Unit
DC-GBR Delay-critical GBR
DL Downlink
DRB Data Radio Bearer
DU Distributed Unit
EWMA Exponentially Weighted Moving Average
GBR Guaranteed Bit Rate
GFBR Guaranteed Flow Bit Rate
HARQ Hybrid Automatic Repeat Request
IE Information Element
IIR Infinite Impulse Response
L2 Layer 2 (i.e. protocol stack and functionality including SDAP, PDCP, RLC, MAC, L2-PS)
L2-HI Layer 2 High
L2-HI-CU Layer 2 High Central Unit
L2-HI-DU Layer 2 High Distributed Unit
L2-LO Layer 2 Low
L2-NRT Layer 2 Non-Real Time
L2-PS Layer 2 Packet Scheduler
L2-RT Layer 2 Real Time
MAC Medium Access Control
MDBV Maximum Data Burst Volume
MFBR Maximum Flow Bit Rate
PER Packet Error Rate
PDB Packet Delay Budget
PDCP Packet Data Convergence Protocol
PDU Protocol Data Unit
QoE Quality of Experience
QoS Quality of Service
RAN Radio Access Network
RLC Radio Link Control
SDAP Service Data Adaptation Protocol
SLA Service Level Agreement
SMA Simple Moving Average
SN Sequence Number
TSN Time Sensitive Networking
TTI Transmission Time Interval
UL Uplink
UM Unacknowledged Mode
URLLC Ultra-Reliable Low-Latency Communication
XR eXtended Reality

## Claims

1. A method performed by a base station to implement Delay Critical-Guaranteed Bit Rate Quality of Service (DC-GBR QoS) support, wherein said method comprising:
receiving, at layer 2 (L2) protocol level, QoS flows from upper layer protocol, said L2 protocol level comprising L2-Non-Real-Time functionality (L2-NRT) and L2-Real-Time functionality (L2-RT);
mapping said QoS flows to Data Radio Bearers (DRB) from one or more DRB profiles;
processing said QoS flows according to said DRB at said L2 protocol level to establish a priority path to transfer prioritized data packets of said QoS flows, wherein said prioritized data packets includes Maximum Data Burst Volume (MDBV) compliant data packets and Guaranteed Flow Bit Rate (GFBR) compliant data packets, wherein said processing comprises:
determining compliance of data packets with MDBV and GFBR parameters;
discarding or deprioritizing non-compliant packets based on delivery mode and discard timer configuration; and
transporting said QoS flows to a Layer 1 (L1) protocol level.

2. The method of claim 1,
wherein said L2-NRT comprises (i) a Service Data Adaptation Protocol (SDAP) layer, (ii) a Packet Data Convergence Protocol (PDCP) layer, and (iii) a Radio Link Control (RLC) layer and said L2-RT comprises (i) a Media Access Control (MAC) layer, when there is no split in said RLC layer or (ii) a RLC lowlayer and MAC layer, when there is a split in said RLC layer.

3. The method of claims 1-2, further comprising:
determining whether data packets in said L2-RT are said GFBR compliant data packets based on the total data volume scheduled within an averaging window for a first predefined time interval;
transporting said GFBR compliant data packets in said priority path to said Layer 1 (L1) protocol level.

4. The method of claim 2, wherein said L1 protocol level comprises a Physical layer.

5. The method of claim 2, further comprising:
receiving and buffering data packets of said QoS flows at a PDCP buffer in said PDCP layer;
configuring a discard timer with a predefined time interval for each data packet according to a Packet Delay Budget (PDB);
queuing said data packets in a queue at a RLC buffer of said RLC layer; transporting said data packets from said RLC buffer to a RLC low-layer buffer of said RLC low-layer or a MAC buffer in said MAC layer; and
discarding said data packets at said PDCP buffer and said RLC buffer, when said predefined time interval is expired for said data packets.

6. The method of claim 2, further comprising:
receiving and buffering data packets of said QoS flows at a PDCP buffer in said PDCP layer;
determining whether said data packets are said Maximum Data Burst Volume (MDBV) compliant packets based on the total data volume received within a sliding window for a second predefined time interval, wherein said second predefined time interval is a Packet Delay Budget (PDB);
transferring said MDBV compliant data packets to said RLC layer and discarding non MDBV compliant data packets from said PDCP buffer;
queuing said MDBV compliant data packets in a queue at a RLC buffer of said RLC layer; and
transporting said MDBV compliant data packets from said RLC layer to a RLC low-layer buffer of said RLC low-layer or a MAC buffer in said MAC layer.

7. The method of claim 2, further comprising:
receiving and buffering data packets of said QoS flows at a PDCP buffer in said PDCP layer;
determining whether said data packets are Maximum Data Burst Volume (MDBV) compliant packets based on the total volume received within a sliding window for a second predefined time interval, wherein said second predefined time interval is a Packet Delay Budget (PDB);
marking non MDBV compliant data packets as de-prioritized packets and storing said de-prioritized packets in said PDCP buffer;
queuing said MDBV compliant data packets, in a first queue at a RLC buffer of said RLC layer;
transporting said MDBV compliant data packets from said first queue to a RLC low-layer buffer of said RLC low-layer or a MAC buffer in said MAC layer.

8. The method of claim 7, further comprising:
when PDCP out-of-order delivery is configured and said MDBV compliant packets are not available in said PDCP buffer:
queuing said de-prioritized packets stored in said PDCP buffer in a second queue of said RLC buffer; and
transporting said de-prioritized data packets from said second queue to said RLC low-layer buffer or said MAC buffer only when there are no said MDBV compliant packets in said RLC low-layer buffer or said MAC buffer.

9. The method of claim 8, further comprising:
when PDCP out-of-order delivery is configured and said MDBV compliant packets are available in said PDCP buffer:
deleting said de-prioritized data packets in a second queue of said RLC buffer, when said MDBV compliant data packets are received from said PDCP buffer or an indication received from said PDCP buffer; and
deleting said de-prioritized data packets in said RLC low-layer buffer or
said MAC buffer, when said MDBV compliant data packets are received from said first queue.

10. The method of claim 7, further comprising:
when PDCP in-order delivery is configured and said MDBV compliant packets are not available in said PDCP buffer:
queuing said de-prioritized packets, in said first queue at said RLC buffer; and
transporting said de-prioritized packets from said first queue to said RLC low-layer buffer or said MAC buffer.

11. The method of claim 10, further comprising:
when PDCP in-order delivery is configured and said MDBV compliant packets are available in said PDCP buffer:
retaining said de-prioritized data packets in said first queue at said RLC buffer, when said MDBV compliant data packets are received from said PDCP buffer; and
retaining said de-prioritized data packets in said RLC low-layer buffer or said MAC buffer, when said MDBV compliant data packets are received from said first queue.

12. The method of claim 7, further comprising:
configuring a discard timer with a predefined time interval for each data packet received at said PDCP buffer according to said Packet Delay Budget (PDB);
sending an indication to said PDCP buffer and said RLC buffer to delete said data packets when said predefined time is expired for said data packets; and
deleting said data packets in said PDCP buffer and said RLC buffer according to said indication.

13. A base station to implement Delay Critical-Guaranteed Bit Rate Quality of Service (DC-GBR QoS) support, wherein said base station comprising a transceiver; and
a controller coupled with the transceiver and configured to:
receive, at layer 2 (L2) protocol level, QoS flows from upper layer protocol, said L2 protocol level comprising L2-Non-Real-Time functionality (L2-NRT) and L2-Real-Time functionality (L2-RT);
map said QoS flows to Data Radio Bearers (DRB) from one or
more DRB profiles;
process said QoS flows according to said DRB at said L2 protocol level to establish a priority path to transfer prioritized data packets of said QoS flows, wherein said prioritized data packets includes Maximum Data Burst Volume (MDBV) compliant data packets and Guaranteed Flow Bit Rate (GFBR) compliant data packets,wherein said processing comprises:
determining compliance of data packets with MDBV and GFBR parameters; discarding or deprioritizing non-compliant packets based on delivery mode and discard timer configuration; and
transport said QoS flows to a Layer 1 (L1) protocol level.

14. The base station of claim 13,
wherein said L2-NRT comprises (i) a Service Data Adaptation Protocol (SDAP) layer, (ii) a Packet Data Convergence Protocol (PDCP) layer, and (iii) a Radio Link Control (RLC) layer and said L2-RT comprises (i) a Media Access Control (MAC) layer, when there is no split in said RLC layer or (ii) a RLC lowlayer and MAC layer, wherein there is a split in said RLC layer.

15. The base station of claims 13-14, wherein said controller is further adapted to:
determine whether data packets in said L2-RT are said GFBR compliant data packets based on the total data volume scheduled within an averaging window for a first predefined time interval;
transport said GFBR compliant data packets in said priority path to said Layer 1 (L1) protocol level.

16. The base station of claim 14, wherein said L1 protocol level comprises a Physical layer.

17. The base station of claim 14, wherein said controller is further adapted to:
receive and buffer data packets of said QoS flows at a PDCP buffer in said PDCP layer;
configure a discard timer with a predefined time interval for each data packet according to a Packet Delay Budget (PDB);
queue said data packets in a queue at a RLC buffer of said RLC layer;
transport said data packets from said RLC buffer to a RLC low-layer buffer of said RLC low-layer or a MAC buffer in said MAC layer; and
discard said data packets at said PDCP buffer and said RLC buffer, when said predefined time is expired for said data packets.
